Europäisches Patentamt

European Patent Office

Office européen des brevets

(11) Veröffentlichungsnummer: **0 172 444**
**A2**

(12) # EUROPÄISCHE PATENTANMELDUNG

(21) Anmeldenummer: 85109398.9

(22) Anmeldetag: 26.07.85

(51) Int. Cl.⁴: **A 61 C 13/26**

(30) Priorität: 18.08.84 DE 3430448

(43) Veröffentlichungstag der Anmeldung:
26.02.86 Patentblatt 86/9

(84) Benannte Vertragsstaaten:
AT BE CH DE FR GB IT LI LU NL SE

(71) Anmelder: Körber, Karlheinz, Prof. Dr.
Hohrott 15
D-2305 Heickendorf(DE)

(71) Anmelder: Ludwig, Klaus, Dr.
Auf der Tenne 14
D-2300 Kronshagen(DE)

(72) Erfinder: Körber, Karlheinz, Prof. Dr.
Hohrott 15
D-2305 Heickendorf(DE)

(72) Erfinder: Ludwig, Klaus, Dr.
Auf der Tenne 14
D-2300 Kronshagen(DE)

(74) Vertreter: Meyer-Roxlau, Reiner Ferdinand,
Dipl.-Ing. et al,
Patentanwälte Dr. Franz Lederer Dipl.-Ing. Reiner F.
Meyer-Roxlau Lucile-Grahn-Strasse 22
D-8000 München 80(DE)

(54) **Brückengerüst für die Herstellung von Zahnersatz-Brücken.**

(57) Die Erfindung betrifft ein vorgefertigtes Brückengerüst zur Herstellung von Zahnersatz-Brücken. Das Brückengerüst besteht einerseits aus einem Grundträger zur Überbrückung einer Zahnlücke und andererseits aus Anschlußelementen zum Absetzen des Grundträgers auf Brückenpfeilern. Das Brückengerüst ist insgesamt aus einer Dental-Metallegierung hergestellt und durch Längenveränderung des Grundträgers ohne weiteres an die Länge einer Zahnlücke anpaßbar, wobei gleichzeitig an der Unterseite des Grundträgers Verstärkungsrippen vorgesehen sind. Dieses Brückengerüst macht die bisher erforderliche manuelle Modellierung eines Gerüsts in Wachs und das anschließende Abgießen in Metall entberlich und gewährleistet infolge seiner stets qualitativ gleichartigen Ausbildung eine erheblich vereinfachte schnellere Herstellbarkeit von Zahnersatz-Brücken.

Fig. 2

EP 0 172 444 A2

Croydon Printing Company Ltd.

Brückengerüst für die Herstellung von Zahnersatz-Brücken

Die Erfindung betrifft ein Brückengerüst zur Verwendung bei der Herstellung von Zahnersatz-Brücken.

Bei allen bisher bekannt gewordenen Verfahren zur Herstellung von Zahnersatz-Brücken aus Edelmetall- oder Nichtedelmetallegierungen wird in einer indirekten Weise gearbeitet, da zunächst ein Brückengerüst in Wachs oder Kunststoff modelliert und anschließend entsprechend dem so erreichten Modell ein Brückengerüst in Metall gegossen wird.

Der Erfolg dieser Arbeitsweise hängt in hohem Maße von der Geschicklichkeit des Zahntechnikers ab, und zwar sowohl beim Modelieren des Brückengerüsts in Wachs oder Kunststoff als auch bei dem anschließenden Gießen des Brückengerüsts in Metall. Verständlicherweise fällt daher jedes Brückengerüst qualitativ unterschiedlich aus. Im Übrigen ist diese bekannte Arbeitsweise in hohem Maße arbeitsintensiv und damit zugleich kostenintensiv.

Der Erfindung liegt daher die Aufgabe zugrunde, ein Brückengerüst zur Verwendung bei der Herstellung von Zahnersatz-Brücken zu schaffen, das industriell vorfertigbar ist, so daß die Herstellung einer Zahnersatz-Brücke unter Verwendung des zu schaffenden Brückengerüsts hinsichtlich des Ausfalls und der Qualität der Brücke nicht mehr von der Geschicklichkeit des einzelnen Zahntechnikers abhängt und im übrigen wesentlich schneller und damit kostengünstiger herstellbar ist. Insbesondere soll durch die Vorfertigbarkeit des Brückengerüsts die Möglichkeit erreicht sein, Brückengerüste in verschiedenen Größen und Formen als Sortiment zur Verfügung zu stellen, aus dem für den jeweiligen klinischen Fall das größen- und formenmäßig geeignete Brückengerüst zur Herstellung einer Zahnersatz-Brücke ausgewählt kann.

Diese Aufgabe wird erfindungsgemäß durch die im kennzeichnenden Teil des Patentanspruchs 1 angegebenen Maßnahmen gelöst.

Vorteilhafte Weiterbildungen sind aus den Unteransprüchen zu ersehen.

Durch die erfindungsgemäße Ausbildung im Sinne des Anspruchs 1 wird tatsächlich ein Brückengerüst erreicht, das sich in Größe und Formgebung so variieren läßt, daß insgesamt ein Brückengerüst-Sortiment herstellbar ist, auf das im jeweiligen Bedarfsfall zurückgegriffen kann. Dies ist insbesondere durch die vorgesehene Längenveränderung des Grundträgers erreicht, die ihrerseits für den Fall der Ausbildung der Anschlußelemente als Verlängerungen des Grundträgers durch längenmäßiges Zuschneiden und für den Fall der Ausbildung der Anschlußelemente in Form offener oder geschlossener ringförmiger Umfassungen durch die für diese Ausbildung vorgesehene teleskopartige Ausbildung des Grundträgers gewährleitet ist. Demzufolge läßt sich das Brückengerüst problemlos an die jeweils gegebene Länge einer Zahnlücke anpassen.

Durch die bereits bei der Herstellung des Brückengerüsts vorgesehene Anfertigung desselben aus einer Dental-Metallegierung, beispielsweise einer Edelmetallegierung oder auch einer Nichtedelmetallegierung, ist das Brückengerüst metallisch und in hohem Maße stabil. Die Stabilität hängt nur von der jeweils vorgesehenen Dicke des Grundträgers und seiner Anschlußelemente ab, die von Haus aus so zu bemessen ist, daß den üblicherweise zu erwartenden Kaukräften hinreichend Rechnung getragen ist.

Die an der Unterseite des Grundträgers vorgesehenen Verstärkungsrippen mit ihrer möglicherweise sehr unterschiedlichen Ausrichtung bilden insgesamt ein Retentions- bzw. Verankerungselement für das bei der späteren Herstellung einer Zahnersatz-Brücke vorzusehende Verblendmaterial, also das beispielsweise zu verwendende Zahnprozellan oder einen entsprechenden Kunststoff.

Selbstverständlich können diese Verstärkungsrippen in sich durchbrochen oder mit Hinterschneidungen ausgebildet sein, um so eine möglichst gute Verankerung für das Verblendmaterial zu ermöglichen.

Unabhängig von der Art der Anschlußelemente, nämlich unabhängig davon, ob diese in Verlängerungen des Grundträgers bestehen oder als offene oder geschlossene ringförmige Umfassungen ausgebildet sind, sind diese Anschlußelemente durch entsprechende Präparierung der Brückenpfeiler so an diesen absetzbar, daß sie aus deren präparierter Kontur nicht vorstehen. Dies bedeutet für die in Verlängerungen des Grundträgers bestehenden Anschlußelemente die Einpräparierung von Kavitäten in der Oberseite oder in eine Seite der Brückenpfeiler bzw. für den Fall der Anschlußelemente in Form ringförmiger Umfassungen die Einpräparierung entsprechender außenseitiger ringförmiger Aufnahmestufen an den Brückenpfeilern.

Durch die erfindungsgemäßen Brückengerüste werden erhebliche Verbesserungen in mehrfacher Hinsicht erreicht; die wohl wesentlichsten Verbesserungen sind:
- Kostensenkung: die Brückengerüste sind in stets optimaler Dimensionierung bei gleichzeitig im Vergleich
zur Kaukraft minimalem Gewicht herstellbar; auch hängt
ihre Herstellungszeit nicht etwa von der Geschicklichkeit und dem Können des Zahntechnikers ab; vielmehr
sind sie hinsichtlich ihrer Herstellungskosten als
fertiges Hilfsteil optimal kalkulierbar.

- Fehlervermeidung: die bekannten Fehler bei der bisher
herkömmlichen Herstellung von Brückengerüsten im Wege
der indirekten Herstellung durch manuelles Modellieren
und anschließendes Metallgießen, wobei sich alle Einzelfehler über den gesamten Herstellungsvorgang aufsummieren, sind völlig ausgeschaltet.

- Bruchfestigkeit: durch standardisierte, industrielle
Herstellung kann eine Bruchsicherheit erreicht werden,
wie sie bei der bisherigen manuellen Herstellungsweise
im zahntechnischen Labor nicht möglich war.

- Zeitfaktor: während die bisherige Herstellungsweise
von Zahnersatz-Brücken unter Verwendung der bisher bekannt gewordenen Brückengerüste bedingt durch die
zahlreichen Zwischenarbeitsgänge insgesamt viele Stunden in Anspruch nimmt, lassen sich die erfindungsgemäßen Brückengerüste sofort zwischen bzw. auf die
Brückenpfeiler bzw. Kronenanker anordnen und in einer
bevorzugten Verwendung dort auch selbstätig verlöten,
so daß eine Zahnersatz-Brücke verhältnismäßig viel
schneller herstellbar ist.

- Ästhetik: bedingt durch die Verwendbarkeit von Speziallegierungen hoher Festigkeit, die sich praktisch
nur industriell verarbeiten lassen, und auch durch die
grundsätzlich bessere Gestaltungsmöglichkeit lassen
sich die unter Verwendung des erfindungsgemäßen Brükkengerüsts herzustellenden Zahnersatz-Brücken erheblich graziler gestalten im Vergleich zu der von dentalem Goldguß Gebrauch machenden bisherigen Herstellungsweise. Die grazilere Gestaltungsmöglichkeit gewährleistet im übrigen hinreichend Raum für das anschließend aufzutragende Verblendmaterial.

Die erfindungsgemäßen Brückengerüste sind für eine anschließende Verblendung mit Kunststoff, dental-keramischen Massen bzw. Prozellan geeignet, und zwar ebenso wie für das anschließende Einfügen vollständiger Kunststoff- oder Prozellanzähne und ebenfalls für die Anbringung von Außenfacetten. Die erfindungsgemäßen Brückengerüste eignen sich aber auch, wie die nachfolgende Detailbeschreibung zeigen wird, für die Verwendung in Verbindung mit aus Folienhütchen aufzubauenden Ankerkronen der Brückenpfeiler.

Nachfolgend wird die Erfindung weiter ins einzelne gehend beispielhaft und unter Bezugnahme auf die Zeichnungen beschrieben; in diesen zeigen:

Fig. 1 einen Vertikalschnitt durch einen Oberkiefer- und einen Unterkieferzahn, wobei letzterer überkront ist und in die Krone das Anschlußelement eines erfindungsgemäßen Brückengerüsts inkorporiert ist,

Fig. 2 zwei Brückenpfeiler mit eingefrästen Kavitäten zur Aufnahme der Anschlußelemente des erfindungsgemäßen Brückengerüsts und letzteres vor dem Einsetzen in die Kavitäten sowie das Ganze nach Einsetzen des Brückengerüsts mit seinen Anschlußelementen in die Kavitäten der Brückenpfeiler,

Fig. 3 eine abgewandelte Ausführungsform des erfindungsgemäßen Brückengerüsts in perspektivischer Ansicht zur Darstellung der Möglichkeit der Längenveränderung des Grundträgers und dasselbe Brückengerüst in seitlicher Ansicht in Zuordnung zu zwei Brückenpfeilern zur Darstellung der längenmäßigen Adaptierung des Grundträgers an die Abstandslänge der in die Brückenpfeiler eingefrästen Kavitäten,

Fig. 4 drei verschiedene erfindungsgemäße Brückengerüste in Mehrfachanordnung hintereinander, das eine zur Überbrückung einer einfachen Zahnlücke, das ande-

- 6 -

0172444

re zur Überbrückung einer zweifachen Zahnlücke und das letzte zur Überbrückung einer dreifachen Zahnlücke,

Fig. 5 eine nochmals abgewandelte Ausführungsform eines erfindungsgemäßen Brückengerüsts, und zwar eines solchen, bei dem das eine Anschlußelement zum Absetzen auf zwei einander benachbarten Brückenpfeilern bestimmt ist, so daß die auf diesen aufzusetzenden Kronen über das Anschlußelement des Brückengerüsts miteinander verblockt werden,

Fig. 6 eine weitere Ausführungsform eines erfindungsgemäßen Brückengerüsts mit einer über die gesamte Länge des Grundträgers und der Anschlußelemente desselben durchgehenden, nach unten gerichteten Verstärkungsrippe, die im Zentralbereich der Unterseite angeordnet ist, mit gleichzeitiger Darstellung der Möglichkeit zum Abtrennen eines Teils dieser Verstärkungsrippe zwecks ordnungsgemäßer Adaptierung an die benachbarte Außenfläche des zugeordneten Brückenpfeilers,

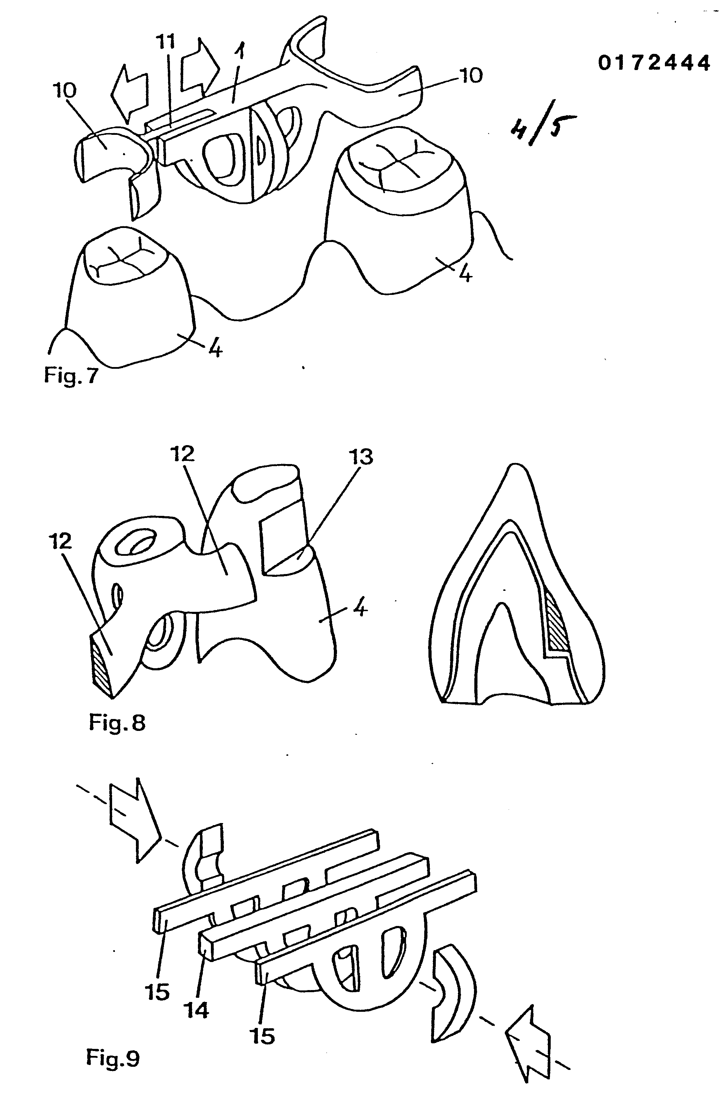

Fig. 7 eine Ausführungsform des erfindungsgemäßen Brückengerüsts mit offenen ringförmigen Umfassungen als Anschlußelement bei teleskopartiger Gestaltung des Grundkörpers, das Ganze in Zuordnung zu zwei Brückenpfeilen,

Fig. 8 eine weitere Ausführungsform des erfindungsgemässen Brückengerüsts mit einer solchen Gestaltung des Anschlußelements, daß dieses lediglich an einer Außenseite eines Brückenpfeilers auf eine entsprechend zu präparierende Stufung abzusetzen ist, und einen Querschnitt durch einen entsprechend präparierten Brückenpfeiler mit bereits abgesetztem Anschlußelement und aufgesetzter Zahnkrone,

Fig. 9 die Möglichkeit des Aufbaus eines erfindungsgemäßen Brückengerüsts aus mehreren quer zum Brückengerüst nebeneinander liegenden Schichten, die durch Kaltverschweißung oder kaltplastische Umformung miteinander zu verbinden sind,

Fig. 10 einmal in perspektivischer und einmal in quasi
geschnittener Darstellung einen Formfräser zur
Präparierung der benötigten Kavitäten eines Brükkenpfeilers und letzteren in der einen Darstellung mit bereits präparierter Kavität,

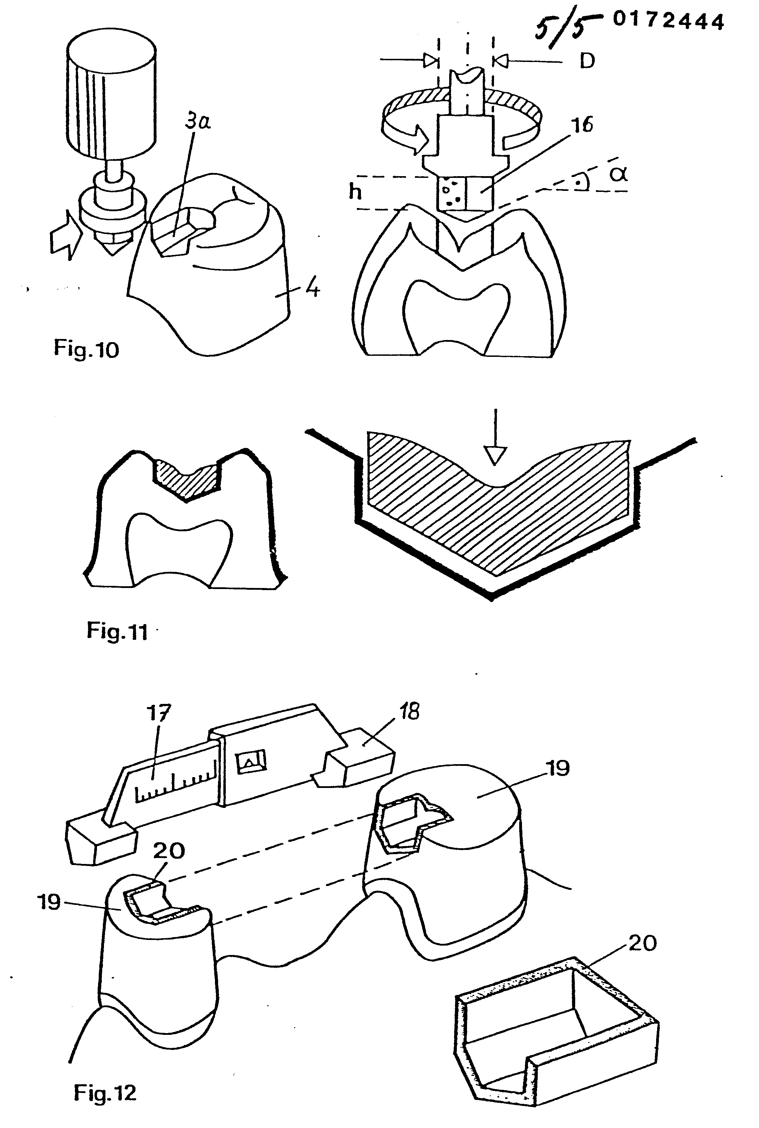

Fig. 11 einen Querschnitt durch einen Brückenpfeiler mit
einpräparierter Kavität zur Aufnahme eines Anschlußelements und bereits übergezogenem Folienhütchen als Anker für die auf dem Brückenpfeiler
vorzusehende Ankerkrone bei gleichzeitiger Einsetzung des Anschlußelements eines erfindungsgemäßen Brückengerüsts in die von dem Folienhütchen
mit ummantelte Kavität, wie dies im zweiten Teil
der Fig. 11 im Detail nochmals vergrößert darstellt ist,

Fig. 12 zwei mit Kavitäten präparierte Brückenpfeiler je
mit einem eingesetzen Kunststoff-Fertigteil, wie
dieses im zweiten Teil der Fig. 12 im einzelnen
dargestellt ist, und eine Meßlehre.

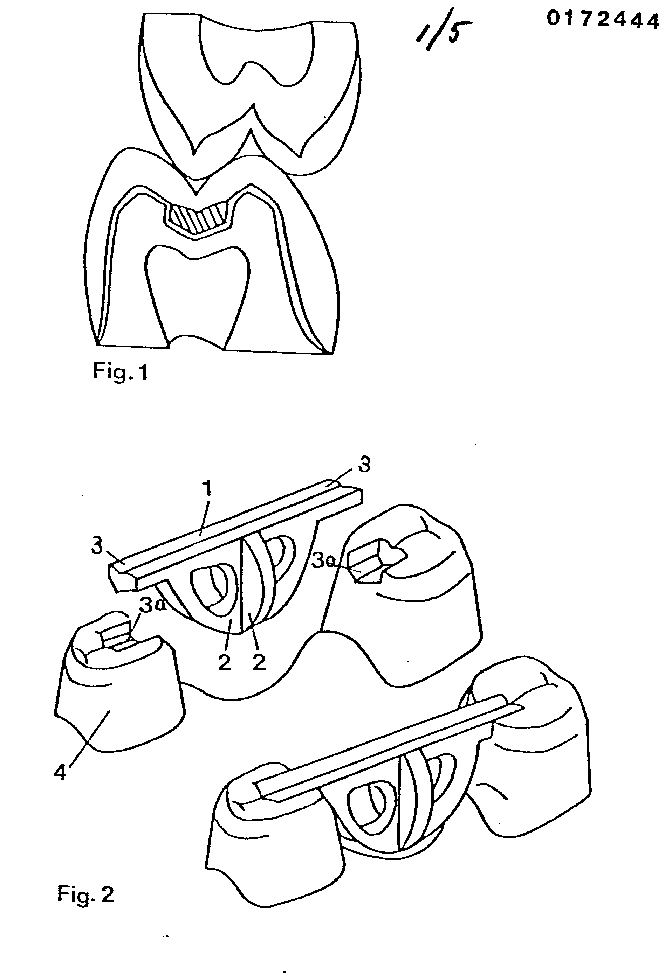

Bei einer in Fig. 2 beispielhaft dargestellten bevorzugten Ausführungsform besteht die tragende Form des Brükkengerüsts aus einem dem anatomischen Okklusionsprofil
(Fig. 1) angepaßten Grundträger 1, an dem im Bereich
maximaler Biegemomente Versteifungsrippen 2 angebracht
sind, die durchbrochen sind sowie zusätzliche Retentionen für Verblendmaterialien aufweisen. Zahl und Form der
Versteifungsrippen 2 entsprechend der Lückensituation
bzw. den anatomischen Gegebenheiten. Bei der Ausführungsform der Fig. 2 erstrecken sich die Verstärkungsrippen 2 vom Grundträger 1 aus im wesentlichen nach
unten und zum Teil quer zu diesem.

Die freien Enden des Grundträgers 1, die praktisch in
Verlängerungen desselben bestehen, bilden Anschlußelemente 3, die in Kavitäten 3a einzusetzen sind, die in die Brückenpfeiler 4 eingefräst sind, auf denen die unter Verwendung des erfindungsgemäßen Brückengerüsts herzustellende Zahnersatz-Brücke zu fixieren ist. Diese Kavitäten 3a sind entsprechend der Querschnittsgestalt der Anschlußelemente 3 paßgenau in die Brückenpfeiler 4 einzufräsen.

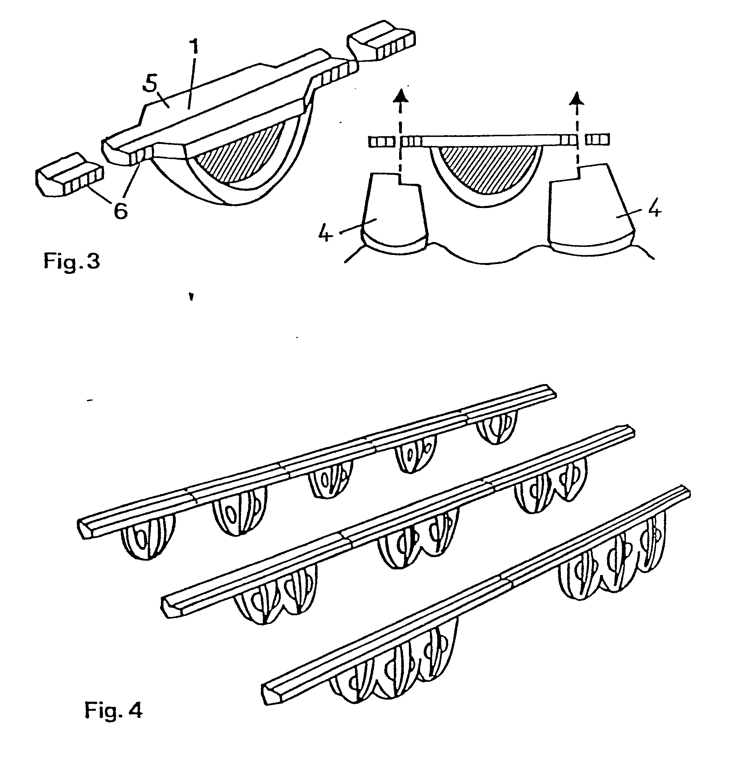

Um das vorgefertigte Brückengerüst an den jeweiligen Abstand zwischen den Brückenpfeilern 4 schnell adaptieren zu können, sind in Bereich der Anschlußelemente 3 bzw. des Grundträgers 1 Markierungslinien 6 vorgesehen. Mittels beispeilsweise einer Trennscheibe kann die Gesamtlänge des Grundträgers 1 einschließlich der beiden Anschlußelemente 3 auf den jeweiligen Abstand der Brückenpfeiler 4 paßgenau abgestimmt werden (Fig. 3). Fig. 3 zeigt auch noch querverlaufende Verstärkungsrippen 5 in der Ebene des Grundträgers 1.

In weiterer Ausbildung sind mehrere Brückengerüste in einem Stück als Stangenprofil aufgebildet (Fig. 4). Das Abtrennen der benötigten Brückengerüste kann besonders rationell und materialsparend erfolgen.

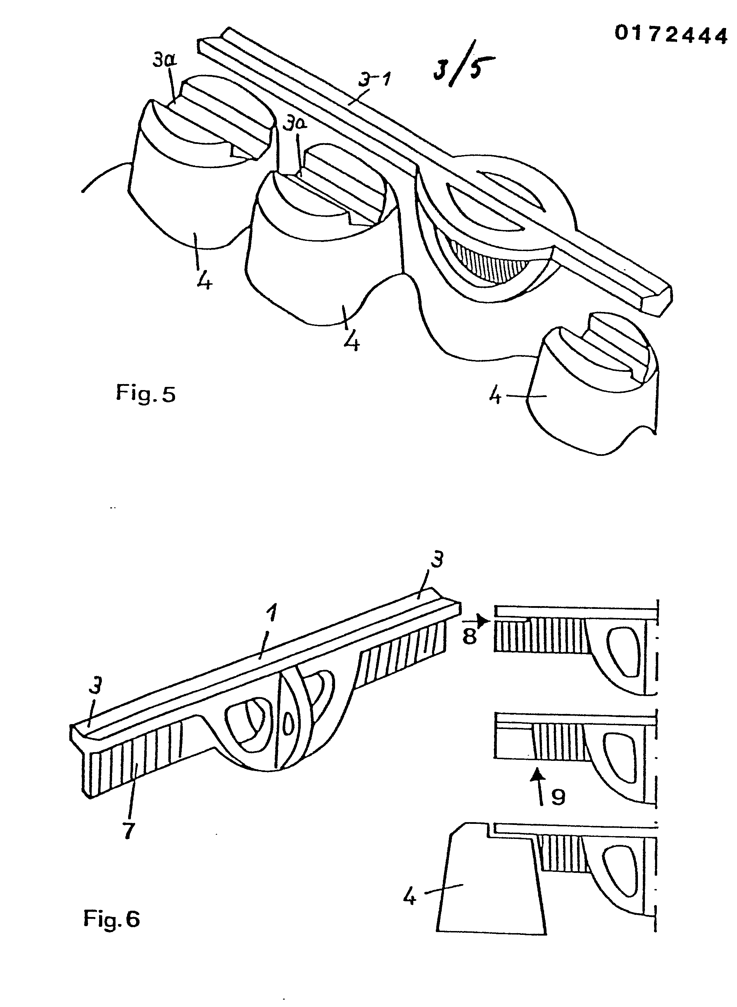

Auch besteht die Möglichkeit der Verblockung mehrerer überkronter Zähne, wozu eine Ausführungsform des erfindungsgemäßen Brückengerüsts bestimmt ist, bei dem der Grundträger 1 einschließlich des zugehörigen Anschlußelements 3 (gemeinsam mit 3-1 bezeichnet) entsprechend lang ausgeführt ist, so daß beide in entsprechende Kavitäten 3a zweier miteinander zu verblockender Brückenpfeiler eingelegt werden können (Fig. 5).

Da bei großen Abständen zwischen den Brückenpfeilern eine Gestaltung des Grundträgers 1 als einfaches längliches Element, wie in den Fig. 1 bis 5 dargestellt ist, wenn von den dort teilweise dargestellten Versteifungsrippen 2 abgesehen wird, möglicherweise keine hinreichende Stabilität gewährleistet, ist in weiterer Ausbildung an der Unterseite des Grundträgers 1 einschließlich der Anschlußelemente 3 eine vertikal nach unten gerichtete Versteifungsrippe 7 vorgesehen, die nach Anpassung der Gesamtlänge des Brückengerüsts an den jeweiligen Abstand zwischen zwei Brückenpfeilern 4 durch zwei einfache Schnitte 8 und 9 so beschnitten werden kann, daß sie genau auf das Lückenmaß zwischen zwei Brückenpfeilern 4 adaptiert werden kann.

In alternativer Ausbildung und insbesondere für besondere klinische Gegebenheiten, bei denen die Anschlußelemente nicht in der Form von Verlängerungen des Grundträgers 1 in Kavitäten der Brückenpfeiler unterzubringen sind, sind die Anschlußelemente entweder als offene oder geschlossene ringförmige Umfassungen 10 ausgebildet, die zur Umfassung von Brückenpfeilern 4 dienen. Um auch hier eine einfache Adaption an den Abstand der Brückenpfeiler 4 zu ermöglichen, ist das Grundelement 1 nach Art eines Schiebeteleskops 11 zweiteilig ausgebildet. Dieses Schiebeteleskop 11 gestattet nicht nur eine Anpassung an den Abstand der Brückenpfeiler, sondern auch eine gegebenenfalls notwendige Vertikalverstellung der einen ringförmigen Umfassung 10 gegenüber der anderen. Zugleich ist hier durch einfaches Verbiegen auch ohne weiteres eine radiale Verschwenkung der einen Umfassung 10 gegenüber der anderen möglich; zum gleichen Zweck kann selbstverständlich auch an einer der beiden ringförmigen Umfassungen 10 ein Drehgelenk vorgesehen sein.

Selbstverständlich sind auch anderweitige Gestaltungen der Anschlußelemente bei einem erfindungsgemäßen Brückengerüst möglich, beispielsweise solche Anschlußelemente 12 die in seitliche Stufungen 13 eines Brückenpfeilers 4 entsprechend den anatomischen Zahnformen einfügbar sind (Fig. 8). Solche Ausführungsformen eignen sich besonders für den Bereich der Frontzähne.

Da die erfindungsgemäßen Brückengerüste nicht mehr im Dentallabor nach der Modellierung gegossen werden, nämlich aus einer einzigen Legierungsschmelze, besteht die Möglichkeit, sie in bevorzugter Ausführungsform aus mehreren Schichten zusammenzusetzen (Fig. 9), die funktionell unterschiedliche Bedeutung haben. Eine innere Kernschicht 14 aus extrem hartem Metall oder Legierungen mit einem hohen Elatizitätsmodul sorgt für die mechanische Festigkeit, während äußere Reingold-Schichten 15 die sofortige Diffusionsverschmelzung mit den Kronenankern zum Beispiel im Keramikofen ermöglichen und damit den ästhetisch wichtigen Goldhintergrund für eine fertige Zahnersatz-Brücke liefern.

Derartige Ausführungsformen werden in bevorzugter Weise durch kaltplastische Umformung oder Kaltverschmelzung aus gewalztem Material in der gewünschten dreidimensionalen Form hergestellt. Dies gestattet aufgrund der hohen Festigkeit des gewalzten Ausgangsmaterials die Herstellung besonders gewichts- und damit kostensparender graziler Brückengerüste.

Selbstverständlich besteht aber im übrigen auch die Möglichkeit, die erfindungsgemäßen Brückengerüste im Wege des Gießens insbesondere aus Gold herzustellen.

Während erfindungsgemäße Brückengerüste mit einer Reingold-Außenschicht eine sofortige Diffusionsverschmelzung mit Kronenanker bei Temperaturen oberhalb von 1063°C gestatten, werden bei anderweitigen Ausführungsformen die Außenflächen und insbesondere die Auflage bzw. Umfassungssegmente zunächst mit Lot oder einem Deckgold beschichtet, um dann später ebenfalls eine selbsttätige Verbindung rationell zu ermöglichen.

In besonders bevorzugter Weise sind die erfindungsgemässen Brückengerüste zu verwenden in Verbindung mit auf
den Brückenpfeilern aufzusetzenden Kronen, die unter
Verwendung von sogenannten Folienhütchen als Kronengerüst nach I. Schoher und A. Whiteman bzw. im Wege der
sogenannten Ceraplatin-Technik hergestellt werden.

Die Anschlußelemente 3 werden in Kavitäten 3a der Brükkenpfeiler 4 eingelegt. Diese Kavitäten 3a werden in die
Kauflächen nach anatomischen Gegebenheiten mittels eines
genormten Schleifkörpers bzw. Fräsers dreidimensional
paßgenau präpariert, wozu der Fräser über einen zylindrischen Abschnitt 16 mit der Höhe h entsprechend der
Höhendimension der Anschlußelemente 3 und eine Kegelspitze mit dem Winkel    entsprechend der Unterseitengestalt der Anschlußelemente 3 aufweist. Sofern die
Kronen für die Brückenpfeiler 4 unter Verwendung der
bereits genannten Folienhütchen als Kronengerüst hergestellt werden sollen, muß dies bei der Präparierung der
Kavitäten hinsichtlich Tiefe und Querabmessung berücksichtigt werden, wie aus der Fig. 11 zu ersehen ist, wo
die dicke schwarze Linie schematisch die Folie des Folienhütchens darstellt.

Die Parallelität der Kavitäten 3a zweier Brückenpfeiler
4 läßt sich mittels einer einfachen und in ihrer Länge
verstellbaren Lehre 16 überprüfen, deren Endteile 17
dieselbe Querschnittsform aufweisen wie die Anschlußelemente 3.

Die besonders bevorzugte Ausführungsform der erfindungsgemäßen Brückengerüste in Verbindung mit unter Verwendung von Folienhütchen hergestellten Kronengerüsten
zeigt folgende Charakteristika:

1. Abstützung auf den Kronengerüsten der Brückenpfeiler,

2. Einsenkung der Anschlußelemente der Brückengerüste
   in die Kauflächen mit Berücksichtigung der anatomischen Gegebenheiten,

3. Präparierung der Kavitäten mittels eines genormten Fräsers,

4. definierte Auflagekavität mit Passung zwischen innerer Querabmessung der Kavität, Folienstärke und Anschlußelement,

5. ausschließlich axiale Belastung der Zähne und ihrer Wurzeln,

6. zu vernachläßigende Zug- und Druckspannungen im und am Folienhütchen des Kronengerüsts der Pfeilerzähne,

7. funktioneller Aufbau des Brückengerüsts mit hohem Elastizitätsmodul und Reingoldbeschichtung an der Außenseite,

8. selbstätige Verschmelzung zwischen Brückengerüst und Folienhütchen des Kronengerüsts der Pfeilerzähne,

9. rationale Anwendung durch sofortige Längenfindung und Abtrennen, gegebenenfalls mittels vorgegebener Markierungen,

10. definierte mechanische Festigkeit.

Sollen die erfindungsgemäßen Brückengerüste in Verbindung mit der normalen Herstellung von Zahnersatz-Kronen in Wachs verwendet werden, so werden die Kronengerüste zunächst erwärmt und im warmen Zustand in den Wachsroling 19 der Brückenpfeiler 4 eingedrückt, wodurch sich dann dort sofort eine analoge Passung zur späteren Aufnahme des Brückengerüsts nach Gießen der Kronen der Brückenpfeiler ergibt. Nach dem Gießen dieser Pfeilerkronen kann das erfindungsgemäße Gerüst mit den Pfeilerkronen in einfacher Weise verlötet werden.

In diesem Zusammenhang können zusätzlich vorgefertigte Teile 20 aus rückstandlos verbrennbarem Kunststoff Verwendung finden, die unter Zuhilfnahme der Lehre 17 oder auch eines bereits in seiner Länge adaptierten Brückengerüsts in den Wachsroling 19 eingefügt werden und für eine genaue Passung sorgen.

# PATENTANWÄLTE

**DR. A. VAN DER WERTH**
DIPL.-ING. (1934-1974)

**DR. FRANZ LEDERER**
DIPL.-CHEM.

**R.F. MEYER-ROXLAU**
DIPL.-ING

0172444

8000 MÜNCHEN 80
LUCILE-GRAHN-STRASSE 22

TELEFON (0 89) 47 29 47
TELEX: 524624 LEDER D
TELEGR.: LEDERERPATENT

26. Juli 1985
M/Sb


Prof. Dr. Karlheinz Körber

Hohrott 15

2305 Heickendorf


und


Dr. Klaus Ludwig

Auf der Tenne 14

2300  Kronshagen


## P a t e n t a n s p r ü c h e

1. Brückengerüst zur Verwendung bei der Herstellung von Zahnersatz-Brücken, gekennzeichnet durch einen Grundträger (1) zur Überbrückung einer zu schließenden Zahnlücke und an den beiden Enden des Grundträgers (1) vorgesehene Anschlußelemente (3) zum Absetzen des Grundträgers (1) auf Brückenpfeilern (4) bzw. Ankerkronen, wobei der Grundträger (1) und die Anschlußelemente (3) aus einer Dental-Metallegierung gefertigt sind, der Abstand zwischen den Anschlußelementen (3) durch Längenveränderung des Grundträgers (1) veränderbar ist und an der Unterseite des Grundträgers (1) im wesentlichen nach unten und gegebenenfalls quer zum Grundträger (1) gerichtete Verstärkungsrippen (2) vorgesehen sind.

- 2 -

0172444

2. Brückengerüst nach Anspruch 1, gekennzeichnet, durch weitere Verstärkungsrippen (5) quer zum Grundträger (1) und in dessen Ebene.

3. Brückengerüst nach Anspruch 1 oder 2, dadurch gekennzeichnet, daß die Verstärkungsrippen (2) derart ausgeformt und angeordnet sind, daß sie eine dreidimensionale Retentionselement-Gruppe für das Brückenverblendmaterial bilden.

4. Brückengerüst nach Anspruch 3, gekennzeichnet durch eine der Anzahl der durch eine Zahnersatz-Brücke zu ersetzenden Zähne entsprechende Zahl von Retentionselement-Gruppen.

5. Brückengerüst nach mindestens einem der Ansprüche 1 bis 4, dadurch gekennzeichnet, daß die Anschlußelemente (3) in Verlängerungen des Grundträgers (1) bestehen.

6. Brückengerüst nach Anspruch 5, dadurch gekennzeichnet, daß die Querschnittsgestalt mindestens der Anschlußelemente (3) dem anatomischen Verlauf des Pulpendaches und dem Okklusionsfeld natürlicher Zähne nachgebildet ist.

7. Brückengerüst nach Anspruch 6, dadurch gekennzeichnet, daß die Querschnittshöhe mindestens der Anschlußelemente (3) kleiner ist als die maximal mögliche Präparationstiefe über der Pulpa der Brückenpfeiler (3a) bzw. Ankerkrone.

8. Brückengerüst nach mindestens einem der vorhergehenden Ansprüche, dadurch gekennzeichnet, daß mindestens ein Anschlußelement (3-1) so lang ausgeführt ist, daß es gleichzeitig auf mehreren Brückenpfeilen bzw. Ankerkronen absetzbar ist, um diese miteinander zu verblocken und damit der mittels des Brückengerüsts herzustellenden Zahnersatz-Brücke einen stabileren Pfeiler zur Verfügung zu stellen.

9. Brückengerüst nach mindestens einem der vorhergehenden Ansprüche, dadurch gekennzeichnet, daß im Zentralbereich und an der Unterseite des Grundträgers (1) und der Anschlußelemente (3) eine über die Gesamtlänge des Grundträgers (1) und der Anschlußelemente (3) durchgehende und nach unten gerichtete Verstärkungsrippe (7) vorgesehen ist, die bei der Herstellung einer Zahnersatz- Brücke in Anpassung an den klinischen Fall entsprechend dem benachbarten Flächenverlauf des Brückenpfeilers (4) bzw. der Ankerkrone vom Grundträger (1) abzutrennen ist.

10. Brückengerüst nach mindestens einem der Ansprüche 1 bis 4, dadurch gekennzeichnet, daß die Anschlußelemente als offene oder geschlossene ringförmige Umfassungen (10) für die Brückenpfeiler (4) bzw. Ankerkronen ausgebildet sind und daß der Grundträger (1) in Längsrichtung teleskopartig ausgebildet ist.

11. Brückengerüst nach mindestens einem der Ansprüche 1 bis 10, dadurch gekennzeichnet, daß es aus geschmiedetem oder gewalztem Material gestanzt und durch kaltplastische Umformung nachgearbeitet ist oder insgesamt ein Gußteil aus Gold ist.

12. Brückengerüst nach mindestens einem der vorhergehenden Ansprüche, dadurch gekennzeichnet, daß mindestens der Grundträger (1) und gegebenenfalls auch die in Verlängerungen desselben bestehenden Anschlußelemente (3) aus mehreren quer zur Längsrichtung des Brückengerüsts nebeneinander liegenden Schichten (14, 14, 15) aufgebaut ist bzw. sind, wobei mindestens eine (14) der inneren Schichten eine solche aus einem Material mit einem hohen Elastizitätsmodul ist.

13. Brückengerüst nach Anspruch 12, dadurch gekennzeichnet, daß die mehreren Schichten (15, 14, 15) durch
    Kaltverschweissung miteinander verbunden sind.

14. Brückengerüst nach mindestens einem der vorhergehenden Ansprüche, dadurch gekennzeichnet, daß die Ver-
    stärkungsrippen (2) in Wege der Kaltverschweißung an
    dem Grundträger (1) befestigt sind.

0172444

Fig. 1

Fig. 2

Fig. 3

Fig. 4

Fig.5

Fig.6

Fig. 7

Fig. 8

Fig.9

Prof.Dr.K.H.Körber, Dr.K.Ludwig

Fig.10

Fig.11

Fig.12

Prof. Dr. K. H. Körber · Dr. K. Ludwig